# EUROPEAN PATENT APPLICATION

(11) **EP 0 878 964 A1**
(43) Date of publication of application: **18.11.1998**
(21) Application number: 98303806.8
(22) Date of filing: 14.05.1998
(51) Int. Cl.: H04N 7/088

(54) **Virtual information selection system**

(30) Priority: 15.05.1997 US 856723
(71) Applicant: General Instrument Corporation, Horsham, Pennsylvania 19044 (US)
(72) Inventor: Schell, Charles E., III, Churchville, PA 18966 (US); Hamilton, Jeffrey S., Doylestown, PA 18901 (US)
(74) Representative: Boydell, John Christopher

(57) **Abstract**

A system for receiving and prioritising information sources in accordance with an information consumer's past preferences comprises a headend apparatus (25) for transmitting programs and selective service characteristics related to the programs, a receiver (27) for receiving the programs and related service characteristics, means (53) for storing the service characteristics, means for identifying and learning the preferences of an information consumer, and selection means responsive to the identifying means for prioritising the consumer's choices.

## Description

This invention generally relates to information systems. More particularly, it relates to an electronic information delivery system and method that includes an interface which learns, via a plurality of means, a consumer's preferences based upon past choices and prioritizes the presentation of future services.

Technological advances in electronics and computer software in the information services field has made available a profusion of information that can be quickly accessed. Today, CATV communication systems are capable of providing over five hundred individual channels for delivering video, audio and other data services. Regional bell operating companies (RBOCs) now compete with CATV providers for video and audio program delivery in addition to providing traditional telephone services. As a result of the diversity and proliferation of information services, consumers are now faced with an overwhelming number of information sources from which to choose.

Electronic program guides, which present a schedule of programs in progress and upcoming programs, are capable of displaying only a limited number of programs at any one time when using a television set as a display. With CATV systems projected to offer over five hundred channels of programming it is impractical to display all of the program choices.

CATV programmers have attempted to ease the burden on consumers. Since programs of different genres and interests usually appear on a single channel, one solution is to offer channels with a specific programming genre such as the Science Fiction Channel™, the History Channel™ or the Comedy Channel™. However, these channels comprise a small percentage of the total number of channels available.

There have been systems developed which have attempted to alleviate the problems and frustration resulting from a large number of programming choices. U.S. Patent 4,706,121 discloses a system wherein the consumer must develop a search strategy and specify the desired service by choosing from a number of genres available on the system such as movies, sports, comedies, dramas, educational shows, etc. Consumers select one or more of these genres and the system provides a short list of alternatives to their selection. This process is interactive and can lead to mistakes for many users.

Accordingly, there exists a need for an information service selection system which operates transparently or without extensive consumer involvement by learning a consumer's past information preferences to limit and prioritize present and future program offerings based upon those preferences.

The invention comprises an intelligent information system that acquires historical information about a consumer's previous information service choices and collates the information into specific genres. The system prioritizes the available services in accordance with the consumer's previous preferences. The system includes a headend source for transmitting the information service choices and characteristics related to each service, and a plurality of settop terminals for receiving the transmissions. The settop terminals monitor the service choices of an information consumer by storing the associated service characteristics. Based upon the accumulated service characteristics, the system prioritizes the present and future service choices available into a tabular schedule display.

Accordingly, it is an object of this invention to provide an information selection system which prioritizes available service choices presented to a consumer to enable a consumer to easily select a service from among a plurality of services.

It is another object of this invention to provide an information selection system which automatically prioritizes available service choices based upon historical viewing habits into a virtual programming schedule.

Other objects and advantages will become apparent to those skilled in the art after reading the detailed description of a presently preferred embodiment.

### BRIEF DESCRIPTION OF DRAWINGS

**Figure 1** is a simplified diagram of a CATV transmission system.

**Figure 2** is a plot of forward and reverse transmission frequencies.

**Figure 3** is a settop terminal made in accordance with the teachings of the present invention.

**Figure 4** is a functional block diagram of the virtual information selection system of the present invention.

**Figure 5** is a block diagram of the operation of the virtual information selection system of Figure 3.

**Figure 6** is a flow diagram of the consumer program mode of the virtual information selection system.

**Figure 7** is a diagram of a sample service selection screen.

The preferred embodiment will be described with reference to drawing figures wherein like numerals represent like elements throughout.

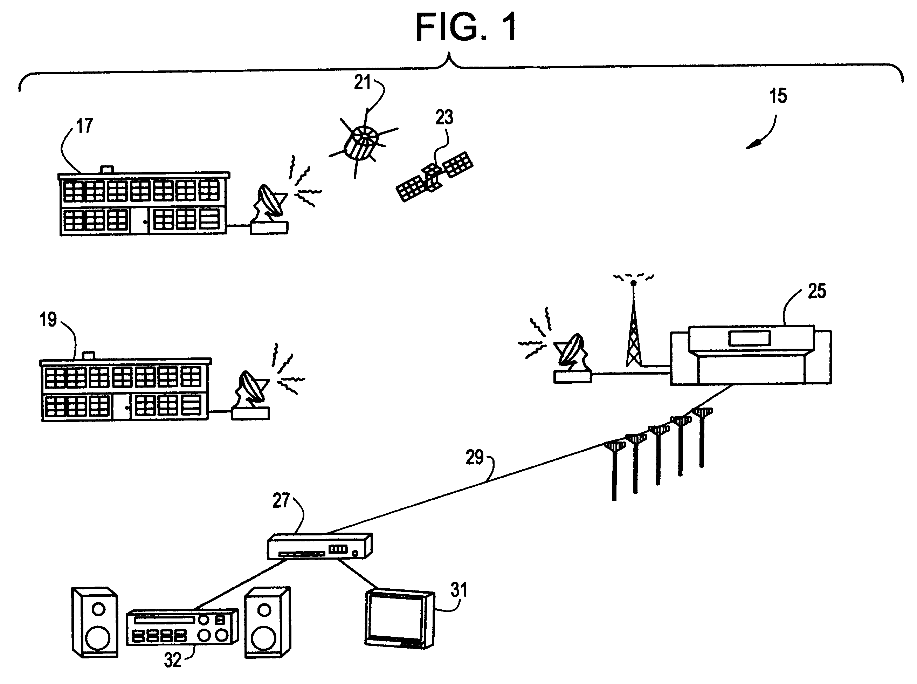

A CATV communication system **15** embodying the present invention is shown in **Figure 1**. The communication system **15** comprises one or more information providers **17, 19** which communicate via satellite uplinks **21, 23** with a plurality of CATV headends **25**. Each headend **25**, in turn, communicates with a plurality of settop terminals **27** which are located in a consumer's home. The settop terminal **27** receives transmissions from the headend **25** through the CATV transmission network **29**. The transmission network **29** may comprise a standard coaxial network, a hybrid fiber-coax network or a "wireless cable" network employing microwave transmitters and receivers. The settop terminal **27** provides the interface between the consumer's television monitor receiver **31** or a stereo system **32**, and the communication system **15**.

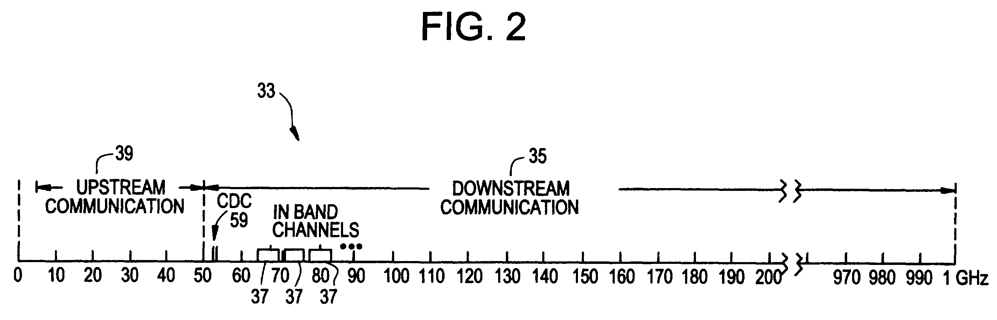

As shown in **Figure 2**, the transmission spectrum typically extends up to 1 GHz. To provide a bi-directional communication flow over the transmission network **29** between the headend **25** and the settop terminals **27**, the transmission spectrum **33** is allocated into two regions of frequencies. Forward or downstream frequencies **35** originating at the headend **25** usually employ a bandwidth **35** of frequencies above 50 MHz. The forward frequency bandwidth **35** is further divided into 6 MHz broadcast channels **37** which are primarily used to transmit services such as analog or digital video broadcasts and their associated analog or digital audio programs. Channels transmitting other media such as music, voice or data may have different bandwidth requirements, but always exist in the downstream communication band **35**.

Reverse or upstream frequencies **39** originate at the settop terminals **27** and usually occupy a bandwidth of frequencies from 5 to 50 MHz. The bandwidth of each upstream channel depends upon the communication requirements of the interactive application.

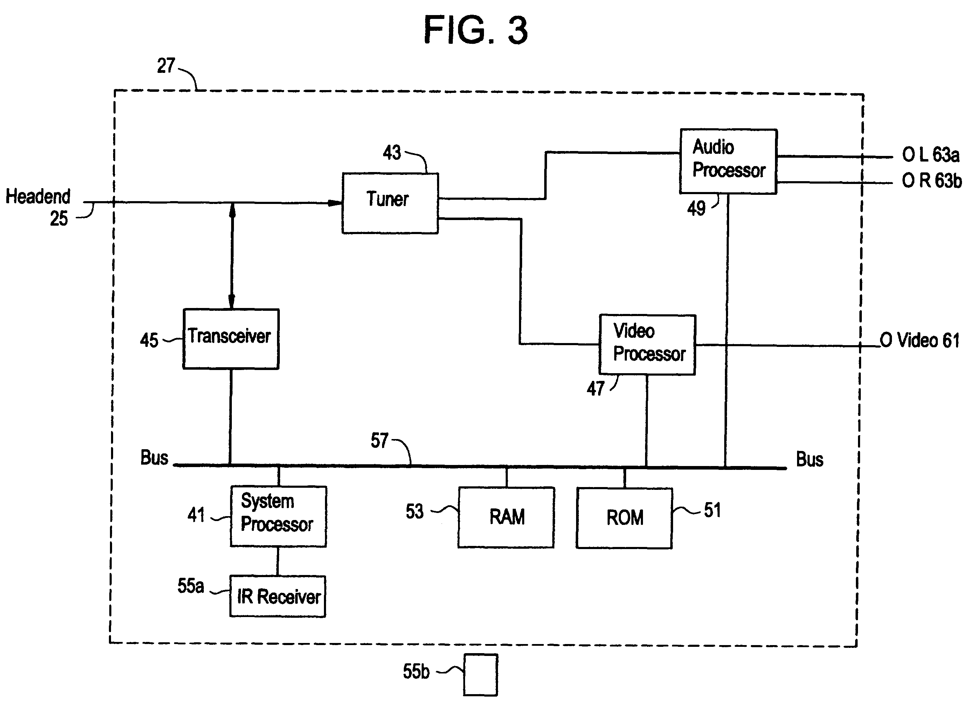

Referring to **Figure 3**, a settop terminal **27** made in accordance with the present invention is shown as a block diagram. The settop terminal **27** includes a system processor **41**, a frequency agile tuner **43**, a data transceiver **45**, a video processor **47**, an audio processor 49, ROM 51, RAM 53 and an IR remote interface **55**. A system bus **57** facilitates communications between the various processors within the settop terminal **27**.

The data transceiver **45** provides a data interface between the system processor **41** and the CATV headend **25**. The transceiver **45** receives and demodulates out-of-band downstream data transmissions from the headend **25** over a data-only channel, known as the control data channel (CDC) **59**. Referring to **Figure 2**, the CDC **59** occupies a small bandwidth usually, but not necessarily, centered around 55 MHz. In an alternative embodiment, the transceiver **45** also modulates outgoing data to permit transmission of communications upstream from the settop terminal **27** to the headend **25**. It should be understood that communication of data upstream is not required for operation of the present invention.

Referring back to **Figure 3**, the system processor **41** provides overall control of the settop terminal **27**. The system processor **41** reads code from the ROM **51** when powered to initialize all processors. The RAM **53** stores updated control or authorization information and any executable instructions or programs sent from the headend **25**. As will be explained in detail hereinafter, information from the headend **25** includes program characteristics data which are also stored in RAM **53**.

The frequency agile tuner **43** demodulates the carrier frequency of a channel selected by the consumer. Audio and video content is processed through the audio processor **49** and the video processor **47**, respectively, in a manner which is well known to those familiar in this art. The demodulated baseband video signal may be modulated on a second, intermediate carrier frequency corresponding to NTSC television channels 3 or 4 to provide a video output **61**. Left and right stereo audio outputs **63a, 63b** are also provided for input into a stereo system (not shown) or the audio inputs of a consumer's television **21**.

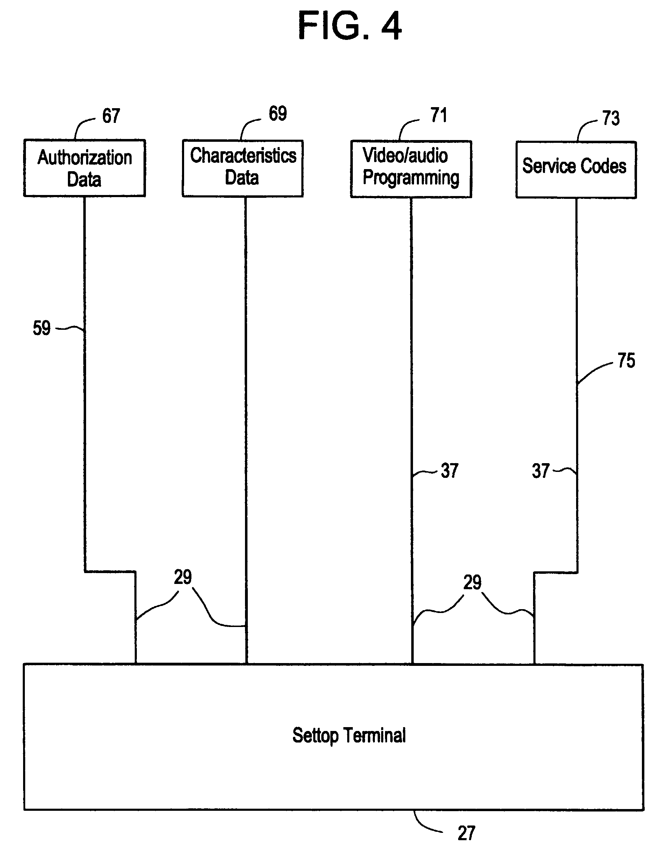

As shown in **Figure 4,** the virtual information selection system 65 of the present invention receives several different types of data over both the CDC **59** and broadcast channels **37**. Authorization data **67** is transmitted to the settop terminal **27** via the CDC **59**. Characteristics data **69** may be transmitted to the settop terminal **27** on a broadcast channel **37** as part of the video/audio programming service codes 75 within the VBI **75** or via the CDC **59**. Data services **71** are transmitted downstream over the broadcast channels **37** with associated service codes **75** transported within the VBI **75**.

The characteristics data **69** collateral to various programs is transmitted from the headend **25** to the settop terminal **27** in assembled frames. Characteristics data **69** may be transmitted synchronous or asynchronous with the data services **71**. Advertisements may force changes to the delivery of the characteristics data **69** during the time they are on the air if synchronous transmission is employed. Characteristics data **69** may be transmitted ahead of data service delivery to enable selection ahead of time.

For synchronous data transmission, the characteristics data **69** is included within the data service **71** signal itself while asynchronous data transmission transmits the characteristics data **69** downstream on any of a plurality of data channels. Characteristics data **69** includes information regarding the specific forward frequencies 35 or channels on which the data service **71** is delivered and on the time of transmission. For example, a specific set of characteristics is transmitted downstream in association with the channel (ex., channel 55) and the program schedule (ex., local news from 5:30-6:00 PM weekly). Either the operator of the delivery system loads the characteristics data **69** into a database located at the headend **25** or a data provider transmits the information to the system via a pre-determined data communications path.

The headend **25** continuously transmits the characteristics data **69** as described above, which is related to the available programming choices. When the CDC **59** is used to transmit data, the data transceiver **45** demodulates and decodes the data. The data is stored in RAM **53** for further processing as will be described in detail hereinafter. Service code data **73** for each service **71** is transmitted in-band by the headend **25** within specified lines (ex., line 18) of the respective channel's vertical blanking interval (VBI) **75**.

The data services **71** comprise analog or digital video broadcasts with associated audio, audio-only or video-only programs, or modulated digital data and voice transmissions. An information service provider originates live or archival broadcasts or interactive services comprising movies, electronic catalogues, downloadable applications, electronic encyclopedias, games and other services. Each data service **71** also includes a service code **73** which is transported within the VBI **75** of the associated program. As will be explained in greater detail hereinafter, the service codes are used to authorize or deny a selected service to a particular consumer depending on whether the consumer has paid for the selected service.

The characteristics data **69**, is delivered concurrently with, or prior to the video/audio programming **71** over the CDC **59** or over an alternate data channel. The data includes descriptive information corresponding to the video/audio programming **71**. For example, if the video/audio programming **71** includes a "western" movie program, the characteristics data **69** contains corresponding information such as: "movie, western, cowboy, violence, gunfight." A comedy program could be described by the characteristic data **69** as "slapstick, comedy, sitcom."

The authorization data **67** includes an authorization table **77** which a list of services paid for which that consumer is authorized to receive. When a consumer tunes to a specific channel **37**, the settop terminal **27** reads the service code **73** transmitted within the VBI **75** and compares the service code **73** with the authorization table **77** and determines if the subscriber is authorized to receive that service **71**. The service **71** is processed in a manner that is well known to those skilled in the art for delivery to the consumer.

A service selection means **79** is provided for permitting a consumer to select from one of the available program choices **71**. The service selection means **79** may be any type of input device such as an IR remote controller **81**, a keyboard, a mouse, a joystick or a voice recognition system.

Generation and insertion of the characteristics data **69** is preferably performed by the service provider **17**. Characteristics used to describe the data service **71** would thus become a part of the service provider's **17** marketing strategy. The broader the search criteria provided, the greater the chance the service will be selected.

The information service provider **17** transmits data including both the service data **71** and the characteristics data **69** to the headends **25** for forwarding to the settop terminals **27**. As will be explained in detail hereinafter, each settop terminal **27** receives the composite signal, reads and stores the characteristics data **69** in RAM **53** and, in a manner well known to those skilled in the art, processes the audio and video portions of the service data **71**.

Those of skill in the art would appreciate that there can be various arrangements for transmitting both the service data **71** and the characteristics data **69** to the consumer without departing from the spirit and scope of the invention. For example, the characteristics data **69** may be delivered separately to the settop terminal **27**. In this embodiment, an electronic service provider **17**, such as Home Box Office® (HBO®) or a third party, originates the service characteristics **69** for the programs. The service data **71** and the characteristics data **69** are separately sent to each headend **25**. The CATV operator at the headend **25** may insert the characteristics data **69** into the VBI **75** of the corresponding data service **71** or collect characteristics data **69** for all services provided by the system and transmit it downstream on a dedicated channel **59** or **37**. Third-party entities may also provide service characteristics to multiple service providers **17** wherein the service provider 17 couples these service characteristics **69** with the respective service **71** prior to transmission to the settop terminal **27**.

CATV operators are generally local operators who recognize the needs of their consumers much better than a national information service provider **17**. The CATV operator may add additional information into the characteristics data **69** to more specifically tailor the characteristics data **69** to its consumer base. This additional information may include terminology which is more suitable for that region or may even include foreign language terms and identifiers.

In a second alternative embodiment, the CATV operator may transmit the characteristics data **69** over a separate data channel, such as a control data channel (CDC) **59** to each settop terminal **27**. The CDC **59** comprises a carrier frequency, or group of frequencies, reserved specifically for the transmission of data. In this embodiment, coordination of the service data **71** with the corresponding characteristics data **69** is performed within the settop terminal **27**. The modem **102** receives the service data **69** over the CDC **59**, which would include a reference to the corresponding program within the service data **69**, and stores the data in the RAM **53**.

In a third alternative embodiment, publicly available program descriptions are utilized to generate the characteristics data **69**. Public service providers, such as TV Guide®, currently offer an electronic database of descriptions for scheduled programs. This database can form the basis for developing characteristics data **69**. In this alternative, the settop terminal **27** extracts the service characteristics **69** from the descriptions by selecting, for example, all words greater than a predetermined length. It is assumed that these words are most likely to describe program content. In order to enable this type of selection, modern lexical analysis software as is known in the art could be used. Lexical analysis may be performed at the headend **25** or at the settop terminal **27**. If the analysis is performed at the headend **25**, the characteristics data **69** is transmitted separately from the program services **71**. If the analysis is performed at the settop terminal **27**, only the program description is transmitted, conserving network resources.

For example, a description of a movie sent in service codes **73** may be "action packed adventure story set in the Midwest during the Civil War." The lexical analysis software will extract all nouns (story, Midwest) and all adjectives (action, packed, adventure, civil) having greater than three letters. These words are then used as the characteristics data **69** for the particular program.

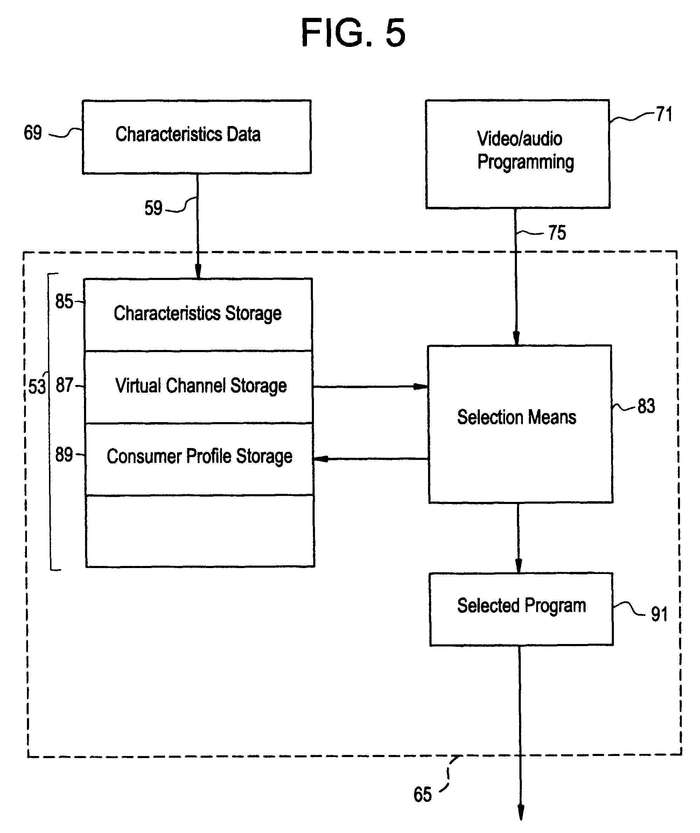

Referring to **Figure 5**, the settop terminal **27** accepts and stores the characteristics data **69** in memory **53**. The memory **53** and the selection means **83**, (which includes the IR interface **55a, 55b**, the tuner **43** and the system processor **41**) are operatively coupled as will now be explained in detail. The memory **53** is partitioned into several different areas which are for: 1) characteristics storage **85**; 2) virtual channel storage **87**; and 3) consumer profile storage **89**.

The characteristics storage **85** stores the service characteristics in real time for all of the channels provided by the CATV operator. The characteristics storage **85** may also store the characteristics for programs that are scheduled within a predetermined time, such as within the next **12** hours. As characteristics data **69** are downloaded from the characteristics data transmission, older data is overwritten.

The virtual channel storage **87** stores user defined preferences, virtual channel search characteristics and titles for the virtual channels. It also stores the virtual channels and user-input preferences for each of a plurality of consumers. The virtual channel storage **87** is updated only by direct input from the consumer when the user specifically changes or adds to selection criteria, titles or other data affecting the virtual channels.

The consumer profile storage **89** stores the history of selected services and other relevant information for a particular consumer or group of consumers. This portion of memory **89** is updated each time the selection means **83** is used by the consumer to select a new program. Other information relevant to the consumer's selection that is stored in conjunction with the history of selected services includes program elapsed time, time between channel changes, number of times returned to after a change, purchases made while watching, active status of picture-in-picture, channel changes on picture-in-picture, the consumer who selected the program, the time of day, day of week, weather info and/or forecast and the last program watched. Preferably, a time limit is set such that the characteristics and related information for a selected program are only downloaded into the consumer profiles storage **89** after the specific selection has been viewed for greater than three to five minutes, although this time limit may be changed and optimized for each particular application or user group.

In operation, the characteristics data **69** including characteristics from every channel provided by the CATV provider is extracted by the transceiver **45** and downloaded into the service characteristics storage **85**. Simultaneously, the service data **73** including a multiplex of all of the programming provided by the CATV provider is input into the selection means **83**. The consumer uses the selection means **83** to select the particular service desired by the consumer. This may be in response to browsing of the current selections on a virtual channel menu or simply by "channel surfing." In either case, the selected service **91** is forwarded to the consumer for viewing and listening. The characteristics from the particular selection **91** are extracted and downloaded into the consumer profile storage **89** to update the storage **89** based upon the latest consumer selection.

The system **65** continually accesses and stores all of the characteristics for all of the programs and separately stores the characteristics for those services which have been selected by the consumer. As will be described in detail hereinafter, the system **65** utilizes and correlates this information to prioritize available program selections based upon the consumer's past preferences and present a prioritized selection menu.

In the preferred embodiment, the system **65** operates in several different modes, including a learning mode, a consumer virtual channel program mode, an automatic request mode, and an advertising mode.

In the learning mode, the system **65** automatically creates "virtual channels" which are defined by the consumer's historical viewing habits. The system **65** assigns services having similar characteristics to a single virtual channel. The system **65** "learns" a consumer's preferences by analyzing the service characteristics and other relevant data stored in the consumer profiles storage **89**. A simplified example of the data stored in consumer profile storage **89** is shown below in Table 1:

**TABLE 1**

| CHARACTERISTICS | NUMBER OF TIMES SELECTED | PERCENTAGE OF VIEWING TIME | ACTUAL VIEWING TIME |
|---|---|---|---|
| Sports | 36 | 30 | 504 |
| Drama | 10 | 20 | 336 |
| Action | 15 | 25 | 420 |
| Movie | 13 | 30 | 504 |
| Violence | 16 | 21 | 353 |
| Comedy | 3 | 2 | 34 |
| Nature | 9 | 8 | 134 |
| Space | 4 | 5 | 84 |
| War | 1 | 3 | 50 |
| Football | 16 | 10 | 170 |
| Baseball | 20 | 20 | 340 |
| Sitcom | 3 | 2 | 34 |

As shown in **Table 1**, the characteristics may pertain to a type of program (sports, movie or sitcom); the subject matter of a program (nature, space or war) ; or an attribute of the program (violence, comedy or action). For each characteristic, the number of times selected, the percentage of viewing time and the actual viewing time were determined. Those skilled in the art should realize that other attributes for the characteristics may also be compiled. The attributes are compared by the system **65** and the characteristics are ranked in order of most preferred to least preferred. It should be apparent that the ranking may be based upon the number of times selected, the percentage of viewing time or the actual viewing time. Each program will most likely have more than one characteristic as reflected by Table 1. For example, a football game may have the attributes "sports, football, action, violence." This permits a more detailed database to develop for more accurate analysis of consumer preferences.

When multiple consumers with different preferences are using the selection means **83**, such as in a household, the system **65** prompts the consumer for identification or an access code and stores the selected characteristic data for each consumer accordingly. In this manner, the system **65** identifies individuals and uses separate preference data for each to provide service tailored to each specific situation. For example, individuals (mom, dad, kid 1), groups (family, mom and kid 1), moods (happy, sad,...) and other categories may be specified and separately tracked. The learn mode can be disabled during a demo, a channel check or when the consumer desires to observe new or different types of programming without disturbing the preferences.

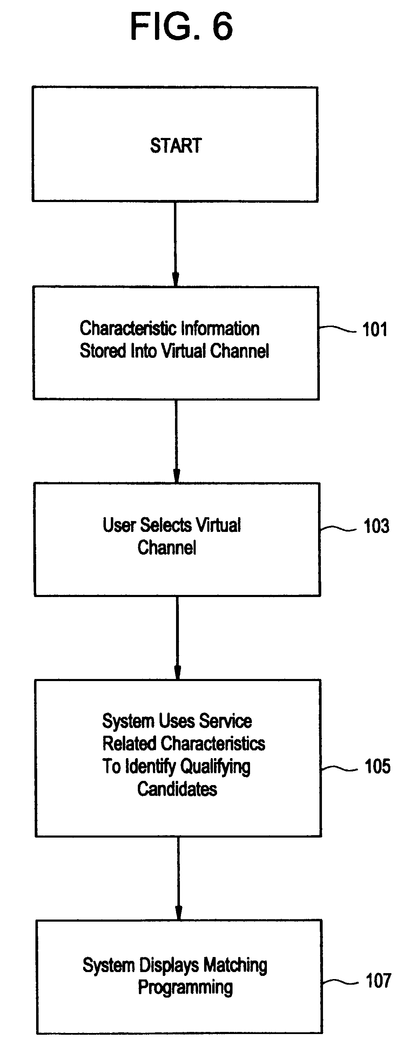

In a second mode, the consumer program mode, the system **65** accepts direct, manual input from the consumer for specific preferences, whereby the consumer creates their own genre or virtual channel. In the consumer program mode, the system **65** accepts user-declared preferences to override any previous viewer history. As shown in **Figure 6**, in this mode the system **65** stores the characteristics **(step 101)** data for a selected program and associates the characteristics with a channel defined by the consumer as having those matching characteristics. This acts like a "virtual channel number." When the virtual channel is selected by the consumer **(step 103)**, the system **65** uses the virtual channel preferences and the programs **71** characteristics **69** contained in memory as having matching characteristics to identify all programs currently available on the CATV system **(step 105)**. The desired programming is then displayed to the consumer **(step 107)**.

The system **65** may be programmed to provide a match if only one characteristic from the program matches the characteristics determining the virtual channel, or if a threshold number of characteristics match, such as three out of four. In this manner, the consumer can create a Sports Channel, i.e. baseball, wherein the consumer is presented all baseball games currently available on the system.

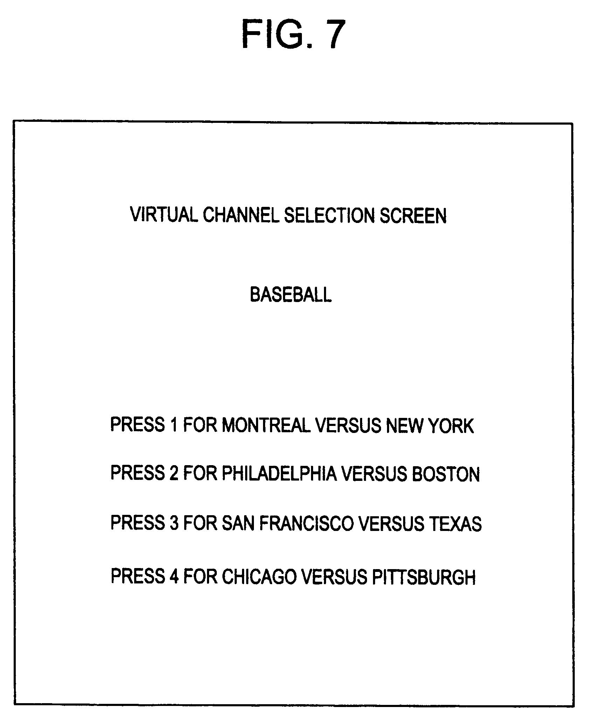

If more than one program with matching characteristics is available at any one time a selection screen, as shown in **Figure 7**, is presented from which the consumer browses through the available choices to make a more specific choice.

For convenience, the consumer is permitted to customize the name of the virtual channels. For example, a channel showing only John Wayne western would be called "John Wayne Western channel", which may be on part of the time, and sometimes be a multiplex (more than one choice at a given time).

The system **65** may also prompt the consumer for specific selection criteria for a present viewing request. For example, entering "no academy awards" would prevent display of any program with "Academy Award" in a program's service characteristics in spite of a consumer history of award shows.

In a third mode, the automatic request mode, the system **65** automatically prompts the consumer for their personal preferences for services watched or used. At the end of a program currently being shown, or at pre-defined time intervals, the system **65** prompts the consumer to declare whether they liked the program, and perhaps the reason why or why not, (i.e. too much violence).

A fourth mode, the advertising mode, is utilized for providing information to consumers in which they have specified a particular interest supports targeted advertising campaigns by advertisers. In this embodiment, advertising and infomercial channels are created having program content related to the advertisers' products. The characteristics pertaining to the program content are sent in the manner discussed hereinbefore. A consumer creates a "virtual advertising channel" by specifying characteristics for those products which the consumer has a particular interest. For example, the consumer may specify "automobiles" and "exercise equipment" if they are considering such purchases. The virtual channel may even be specifically tailored to certain manufacturers by including the manufacturer's name within the virtual channel characteristics. The settop terminal **27** alerts the consumer when advertising having characteristics which match those defined by the virtual channel is currently running.

In operation, data indicating that a commercial message break is about to occur is sent via the characteristics data **69**. The system **65** compares the advertising characteristics with characteristics defined by the consumer. Based on the comparison, the system **65** either automatically tunes the tuner to the channel having the matching commercial message or simply provides the consumer with an audible and/or visible message.

Targeted advertising may be effectively implemented using this system by correlating characteristics of the commercial messages with consumer characteristics stored by the consumer in RAM **53**. The consumer characteristics may include demographic data such as the sex and age group of the information consumer. In the event multiple consumers are currently watching the same television at the consumer location, a prioritization algorithm can be implemented to determine which of the consumers has priority. The actual correlation between the commercial message and the consumer is made on the basis of the identifying data added to the commercial message.

Although the invention has been described in part by making detailed reference to the preferred embodiment, such detail is intended to be instructive rather than restrictive. It will be appreciated by those skilled in the art that many variations may be made in the structure and mode of operation without departing from the spirit and scope of the invention as disclosed in the teachings herein.

## Claims

1. A system for selectively displaying on a selected consumer display a plurality of data services based on a consumer's preference comprising:
a headend for providing the data services to a plurality of settop terminals;
a selected settop terminal associated with the selected consumer display;
said headend including:
means for providing characteristics data for each of the data services;
means for transmitting said characteristics data to said selected settop terminal;
means for transmitting said plurality of data services to said selected settop terminal;
said selected settop terminal includes:
means for receiving at least one data service;
means for receiving said characteristics data;
means for storing said characteristics data;
means for identifying preferences of a specific consumer;
selection means responsive to said identifying means for assembling a selective schedule of the available data services based on correlating said identified consumer preferences with said characteristics data; and
means for generating said selective schedule on the display.

2. The system according to claim 1 wherein said headend transmits a plurality of channels and said characteristics data is transmitted by said headend and received by said settop terminal over a selected channel.

3. The system according to claim 2 wherein said characteristics data is transmitted synchronous with said data services.

4. The system according to claim 3 wherein said selected channel is a dedicated control channel.

5. The system according to claim 3 wherein said selected channel is a data service channel having a VBI and where said characteristics data is transmitted on said VBI.

6. The system according to claim 5 wherein said selected channel is a selected data service channel and said characteristics data on said VBI includes said selected data service's characteristics data.

7. The system according to claim 2 wherein said characteristics data is transmitted asynchronous with said data services.

8. The system according to claim 7 wherein said selected channel is a dedicated control channel.

9. The system according to claim 7 wherein said selected channel is a data service channel having a VBI and where said characteristics data is transmitted on said VBI.

10. The system according to claim 9 wherein said selected channel is a selected data service channel and said characteristics data on said VBI includes said selected data service's characteristics data.

11. The system according to claim 1 wherein said means for identifying preferences is input by a specific consumer using an input device.

12. The system according to claim 1 wherein said means for identifying preferences of a specific consumer is based upon a consumer's past data service choices.

13. The system according to claim 12 wherein said consumer's past data service choices include information pertaining to said past data service content types and scheduling.

14. The system according to claim 13 wherein said past data service content includes:
service title;
parental codes; and
genre.

15. The system according to claim 14 wherein said past data service scheduling includes:
time of day;
total elapsed time spent accessing a selected data service; and
channel identification.

16. The system according to claim 15 wherein said headend transmits a plurality of channels and said characteristics data is transmitted by said headend and received by said settop terminal over a selected channel.

17. The system according to claim 16 wherein said characteristics data is transmitted synchronous with said data services.

18. The system according to claim 17 wherein said selected channel is a dedicated control channel.

19. The system according to claim 17 wherein said selected channel is a data service channel having a VBI and where said characteristics data is transmitted on said VBI.

20. The system according to claim 19 wherein said selected channel is a selected data service channel and said characteristics data on said VBI includes said selected data service's characteristics data.

21. The system according to claim 16 wherein said characteristics data is transmitted asynchronous with said data services.

22. The system according to claim 21 wherein said selected channel is a dedicated control channel.

23. The system according to claim 21 wherein said selected channel is a data service channel having a VBI and where said characteristics data is transmitted on said VBI.

24. The system according to claim 23 wherein said selected channel is a selected data service channel and said characteristics data on said VBI includes said selected data service's characteristics data.

25. The system according to claim 11 wherein said means for identifying preferences further include:
service titles;
parental codes;
genre;
time of day; and
channel identification.

26. The system according to claim 25 wherein said headend transmits a plurality of channels and said characteristics data is transmitted by said headend and received by said settop terminal over a selected channel.

27. The system according to claim 26 wherein said characteristics data is transmitted synchronous with said data services.

28. The system according to claim 27 wherein said selected channel is a dedicated control channel.

29. The system according to claim 27 wherein said selected channel is a data service channel having a VBI and where said characteristics data is transmitted on said VBI.

30. The system according to claim 29 wherein said selected channel is a selected data service channel and said characteristics data on said VBI includes said selected data service's characteristics data.

31. The system according to claim 26 wherein said characteristics data is transmitted asynchronous with said data services.

32. The system according to claim 31 wherein said selected channel is a dedicated control channel.

33. The system according to claim 31 wherein said selected channel is a data service channel having a VBI and where said characteristics data is transmitted on said VBI.

34. The system according to claim 33 wherein said selected channel is a selected data service channel and said characteristics data on said VBI includes said selected data service's characteristics data.

35. The system according to claim 1 wherein said headend further includes an input means for inputting said characteristics data specific for each data service.

36. The system according to claim 35 wherein said identified consumer preferences comprises:
service titles;
parental codes;
genre;
time of day; and
channel identification.

37. The system according to claim 36 wherein said characteristics data comprises:
service titles;
parental codes;
genre;
time of day; and
channel identification.

38. The system according to claim 37 wherein said characteristics data is assembled into a database at said settop terminal;
said database is correlated with said identifying preferences from which matching data belonging to specific data services are identified; and
said data services with matching characteristics data are assembled into a consumer virtual channel at said settop terminal for present and future data services.

39. A system for selectively displaying on a selected consumer display a plurality of data services based on a consumer's preference comprising:
a headend for providing the data services to a plurality of settop terminals;
a selected settop terminal associated with the selected consumer display;
said headend including:
means for providing service descriptions specific for a data service;
means for transmitting said service descriptions to said selected settop terminal;
means for transmitting said plurality of data services to said selected settop terminal;
said selected settop terminal includes:
means for receiving at least one data service;
means for receiving said service descriptions;
said service descriptions are analyzed by a lexical algorithm producing characteristics data specific for the data services;
means for storing said characteristics data;
means for identifying preferences of a specific consumer;
selection means responsive to said identifying means for assembling a selective schedule of the available data services based on correlating said identified consumer preferences with said characteristics data; and
means for generating said selective schedule on the display.

40. The system according to claim 39 wherein said service descriptions specific for each of the data services are obtained from a content provider.

41. The system according to claim 40 wherein said identified consumer preferences comprises:
service titles;
parental codes;
genre;
time of day; and
channel identification.

42. The system according to claim 41 wherein said characteristics data comprises:
service titles;
parental codes;
genre;
time of day; and
channel identification.

43. The system according to claim 42 wherein said characteristics data is assembled into a database at said settop terminal;
said database is correlated with said identifying preferences from which matching data belonging to specific data services are identified; and
said data services with matching characteristics data are assembled into a consumer virtual channel at said settop terminal for present and future data services.

44. The system according to claim 1 wherein:
said headend further includes:
means for providing service descriptions specific for a data service; and
said service descriptions are analyzed by a lexical algorithm producing characteristics data specific for the data services.

45. The system according to claim 44 wherein said service descriptions specific for each of the data services are obtained from a content provider.

46. The system according to claim 45 wherein said identified consumer preferences comprises:
service titles;
parental codes;
genre;
time of day; and
channel identification.

47. The system according to claim 46 wherein said characteristics data comprises:
service titles;
parental codes;
genre;
time of day; and
channel identification.

48. The system according to claim 47 wherein said characteristics data is assembled into a database at said settop terminal;
said database is correlated with said identifying preferences from which matching data belonging to specific data services are identified; and
said data services with matching characteristics data are assembled into a consumer virtual channel at said settop terminal for present and future data services.

49. A settop terminal for selectively displaying on a selected consumer display a plurality of data services provided by a headend based on a consumer's preference, the headend including means for providing characteristics data for each of the data services, means for transmitting said characteristics data to the selected settop terminal, and
means for transmitting the plurality of data services to the settop terminal, the settop terminal comprising:
means for receiving at least one data service;
means for receiving said characteristics data;
means for storing said characteristics data;
means for identifying preferences of a specific consumer;
selection means responsive to said identifying means for assembling a selective schedule of the available data services based on correlating said identified consumer preferences with said characteristics data; and
means for generating said selective schedule on the display.

50. The system according to claim 49 wherein said settop terminal further includes:
a consumer input device;
a frequency agile tuner responsive to a consumer's input for demodulating at least one data service;
an audio processor;
a video processor;
a system processor;
a transceiver;
system RAM;
said system RAM includes:
characteristics storage;
virtual channel storage;
consumer profile storage;
system ROM; and
a common system bus allowing bidirectional communication between said devices.

51. The system according to claim 50 wherein said storage areas are read or overwritten by said system processor in dependence upon when said characteristics data is received and accessed.

52. The system according to claim 51 wherein said characteristics data is written into said characteristics storage creating a characteristics database for all data services provided by said headend for at least one one-hour period.

53. The system according to claim 52 wherein:
said system processor performs said selection means;
said means for personally identifying viewing characteristics includes input by a consumer using said consumer input device; and
said selective schedule is stored in said virtual channel storage.

54. The system according to claim 53 wherein said characteristics data is written into said consumer profile storage when a selected data service is successfully obtained by a consumer for each selected data service;
said consumer profile storage is continually updated when additional data services are selected;
said system processor accesses said consumer profile storage to obtain said characteristics data and assembles a database correlating said characteristics data from previously obtained data services with the presently accessed data service;
said database is then correlated with said characteristics database stored in said characteristics data storage from which matching characteristics data belonging to specific data services are identified; and
said data services with matching characteristics data are assembled into a consumer virtual channel for present and future data services and stored in said virtual channel storage.
